# EUROPÄISCHE PATENTSCHRIFT

(11) **EP 1 628 059 B1**
(45) Veröffentlichungstag und Bekanntmachung des Hinweises auf die Patenterteilung: **06.06.2007**
(21) Anmeldenummer: 05450135.8
(22) Anmeldetag: 09.08.2005
(51) Int. Cl.: F16L 9/18, F16L 47/08, B29C 53/58, B29D 23/20

(54) **Verfahren zur Herstellung von glasfaserverstärkten Kunststoffrohren beliebigen Querschnitts mit Sandwichstruktur**
Process for producing glass fiber reinforced plastic pipes having every section and sandwich structured
Procédé pour fabriquer des tubes plastiques renforcés par des fibres de verre, de toutes sections et de construction sandwich

(30) Priorität: 19.08.2004 AT 60804 U
(43) Veröffentlichungstag der Anmeldung: 22.02.2006
(73) Patentinhaber: Angerlehner Hoch- und Tiefbau GmbH, 4053 Pucking (AT)
(72) Erfinder: Angerlehner, Alfred, 4614 Marchtrenk (AT)
(74) Vertreter: Babeluk, Michael

(56) Entgegenhaltungen:
- EP-A- 0 184 759
- DE-A1- 2 201 485
- DE-U1- 7 632 433
- US-B1- 6 176 523

## Beschreibung

Die vorliegende Erfindung betrifft ein Verfahren gemäß dem Oberbegriff von Patentanspruch 1.

Die Verwendung von GFK-Rohren ist insbesondere im Kanalbau und im Druckleitungsbau seit etlichen Jahren bekannt. Erdverlegte Kanalrohre sind jedoch einem hohen Außendruck ausgesetzt und unterliegen ständig der Gefahr des Einbeulens. Analog sind auch Druckleitungen einem enormen Seitendruck ausgesetzt. Diesem Mangel kann dadurch abgeholfen werden, dass die Wandstärke entsprechend erhöht wird, da die Steifigkeit des Wandquerschnittes mit der dritten Potenz der Wandstärke ansteigt. Dabei ist es seit etlichen Jahren bekannt, den Wandquerschnitt in zwei Deckschichten und eine Kernschicht aufzuteilen, wobei nur die Deckschichten für hohe Zug- oder Druckspannungen ausgelegt werden und üblicherweise aus glasfaserverstärktem Kunststoff bestehen, während die Kernschicht nur auf ausreichende Schub- und Druckfestigkeit ausgelegt zu werden braucht, wofür oft bereits ein synthetischer Schaum, z.B. geschäumtes Polyurethan, ausreicht. Solche Strukturen werden als Sandwich bezeichnet.

Derartige Sandwichstrukturen hat man im Rohrleitungsbau bisher nach drei Methoden hergestellt. Bei der ersten Methode klebt man zunächst auf eine aus faserverstärktem Kunststoff, z.B. im Wickelverfahren, hergestellte innere Deckschicht einen im Profil angepassten Kernwerkstoff, z.B. aus Kunststoffschaum, auf, auf dessen äußere Oberfläche danach wiederum ein Klebstoff aufgestrichen und darauf die äußere Deckschicht aus faserverstärktem Kunststoff aufgewickelt wird.

Bei der zweiten Methode werden die beiden Deckschichtschalen gesondert und getrennt vorgefertigt und danach ineinander geschoben, wonach der Zwischenraum durch ein treibfähiges Kunststoffgemisch ausgeschäumt wird.

Bei der dritten Methode wird im Schleuderverfahren in einer Mehrzahl von Arbeitsgängen in eine Form die äußere Harzschicht der äußeren Deckschicht aufgetragen, danach die Armierung der äußeren Deckschicht aufgelegt und mit Harz getränkt, sodann ein spezifisch leichteres, treibfähiges Gemisch als Kernschichtmaterial aufgegeben und schließlich nach dem erhärten der Kernschicht durch Auftragen einer Harzschicht und einer Armierung die innere Deckschicht eingebracht.

Alle drei Methoden haben jedoch fertigungstechnische Nachteile. Der notwendige Arbeitsaufwand ist verhältnismäßig hoch, sei es durch das anpassen und aufkleben der Kernschicht bei der ersten Methode oder sei es durch die gesonderte Herstellung der beiden Deckschichtschalen auf zwei verschieden großen, besonderen Formkernen bei der zweiten Methode oder sei es durch das mehrmalige An- und Abstellen der Schleuderform für das Einbringen der Armierungen bei der dritten Methode.

Alle drei Methoden haben auch qualitative Nachteile, da die aus synthetischem Schaum bestehende Kernschicht ausgehärtet ist und sein muss, bevor die zweite Deckschicht mit einer gewissen Wickelspannung aufgebracht wird. Dies ist von erheblichem Nachteil für die Festigkeit der Verbindung zwischen Deckschicht und Kernschicht.

Um hier Abhilfe zu schaffen, wurde ein Herstellungsverfahren vorgeschlagen, bei dem auf eine rotierende Form, auf die zunächst in an sich bekannter Weise eine erste Deckschicht durch Wickeln aufgetragen wird, eine zweite Deckschicht mit einem durch eine Führung begrenzten, der gewünschten Wandstärke entsprechenden radialen Abstand von der ersten Deckschicht herangeführt wird und zusammen mit einer gleichzeitig mit ihr zugeführten, den Zwischenraum zwischen den beiden Deckschichten als Kernschicht ausfüllenden, aus einer noch nicht ausgehärteten Matrix und einem Zuschlagsgranulat gemischten Paste in an sich bekannter Art auf die erste Deckschicht aufgewickelt wird, wobei die Zusammensetzung der Paste derart bemessen wird, dass die Paste vor ihrem Erhärten die aufgewickelte zweite Deckschicht in dem vorgegebenen radialen Abstand von der ersten Deckschicht zu tragen vermag.

Diese Methode hat zwar den Vorteil, dass die Kernschicht und die zweite Deckschicht direkt im gleichen Beschichtungsprozess aufgebracht werden und damit in praktisch zwei unmittelbar aufeinander folgenden Arbeitsgängen der gesamte Sandwichquerschnitt hergestellt werden kann, sie weist jedoch auch den Nachteil auf, dass die Matrix der Paste sehr genau den jeweiligen Anforderungen empirisch angepasst werden muss um einerseits die erforderliche Tragfähigkeit und andererseits auch eine ausreichend hohe Modellierfähigkeit zu besitzen. Bei auch nur geringen Schwankungen der Temperatur oder der Luftfeuchtigkeit muss die Matrix neuerlich umständlich an ihr Optimum herangeführt werden. Dieser Nachteil hat einen Einsatz dieser Methode in der Serienfertigung bisher verhindert.

Ein Verbesserungsvorschlag für diesen Nachteil der bekannten Methode besteht darin, für die Kernschichtpaste anstatt der bekannten Kunststoffmatrix eine syntaktische Paste mit einer mineralischen härtbaren Matrix, beispielsweise einer Zementmatrix einzusetzen. Dies führt jedoch zu einer nachteiligen Erhöhung des Gesamtgewichtes des Rohres. Ein weiterer Nachteil dieser Methoden besteht auch im enormen apparativen Aufbaubedarf der Vorrichtungen zur Rohrherstellung.

Eine weitere bekannte Variante der Herstellung von Sandwichgebilden für Rohre, welche mit wesentlich geringerem apparativem Aufbau arbeitet, besteht darin, dass zuerst eine innere Schale aus glasfaserverstärktem Kunststoffmaterial durch wickeln auf einen starren Formgebungsdorn hergestellt wird und anschließend ein festes Kernmaterial um diese innere Schale gewickelt wird, wobei das Kernmaterial mit dem noch nicht polymerisierten Material der inneren Schale oder durch nachfolgende Zugabe eines Klebstoffs verklebt wird und anschließend die äußere Schale hergestellt wird durch Wickeln eines harzgetränkten Glasfaserstranges auf die Außenfläche des Kernmaterials unter Herstellen einer Klebeverbindung entweder durch das entsprechend zusammengesetzte Material der äu-ßeren Schale selbst oder durch getrennte Zugabe eines Klebstoffes, dem schließlich die Härtung des gesamten Gebildes folgt. Das feste Kernmaterial besteht seinerseits aus vorgefertigten Elementen, welche auf kontinuierlichen Trägerschnüren zugeführt wird, wobei die Trägerschnüre zusammen mit den Elementen auf die innere Schale gewickelt werden. Daraus entsteht eine teilweise oder vollständig zusammenhängende Kernschicht.

Rohre nach diesem Herstellungsverfahren haben sich jedoch in der Praxis vor allem deshalb nicht durchgesetzt, da sie bezüglich der mechanischen Festigkeit nachteilig gegenüber den Rohren der älteren Herstellungsverfahren sind.

Aus der DE 101 18 506 A ist ein Rohr bekannt, das einen Sandwichaufbau aufweist. Die Innenlage und die Außenlage sind dabei gewickelte Laminatschichten ausgebildet, die durch eine Füllstoffschicht getrennt sind. Ähnliche Rohre und Verfahren zu deren Herstellung sind in der EP 0 184 759 A und der US 5,474,721 A beschrieben. Mit solchen Rohren ist es zwar möglich, die oben beschriebenen Nachteile teilweise zu verringern, eine Schwachstelle von Rohrverbindungen dieser Art besteht jedoch an den Verbindungsstellen einzelner Rohre. Herkömmliche Muffen haben sich als unzuverlässig und aufwändig in der Herstellung erwiesen.

Die vorliegende Erfindung stellt sich daher die Aufgabe, ein Herstellungsverfahren für glasfaserverstärkte Kunststoffrohre in Sandwichbauweise zu schaffen, welches die Nachteile der bekannten Verfahren vermeidet und ein nach dieser Sandwichbauweise hergestelltes Rohr zu schaffen, welches in beliebigem Querschnitt, beispielsweise auch als Ei-Profil, herstellbar ist, eine hohe Festigkeit gegen Innen- und Außendruck bei gleichzeitig geringem Gewicht des Rohres aufweist, eine insbesondere zum Transport von Lebensmitteln erforderliche hohe Wärmeisoliereigenschaft besitzt und auf einfachste Weise eine muffenlose, dichte Verbindung zwischen den einzelnen Rohren ermöglicht.

Eine besondere Aufgabe der vorliegenden Erfindung ist es weiters, ein Herstellungsverfahren für Kunststoffrohre, sowie Kunststoffrohre selbst zu schaffen, die leicht, sicher und kostengünstig zu einer Rohrleitung verbindbar sind.

Erfindungsgemäß werden diese Aufgaben durch ein Verfahren gemäß Patentanspruch 1 gelöst. Bei einem solchen Verfahren ist vorgesehen, dass das glasfaserverstärkte Kunststoffrohr, welches im Profil einen beliebigen Querschnitt, beispielsweise auch ein Ei-Profil aufweisen kann, in drei Schritten hergestellt wird, wobei die Innenschale in an sich bekannter Weise durch Wickeln von harzgetränkten Glasfasersträngen über einen festen, rotierenden Dorn in mehreren, bevorzugt spiralförmig übereinander liegenden Lagen hergestellt wird. Anschlie-ßend wird beispielsweise mittels einer Schaumpistole auf die rotierende Innenschale ein Zweikomponenten-Schaum aufgesprüht und nach Erreichen der gewünschten Schaumstärke wird die Außenschale über den Schaumkern in derselben Weise gewickelt, wie die Innenschale. Diese drei Arbeitsschritte können unmittelbar aufeinander folgen, es ist aber auch möglich, sie zeitlich voneinander zu trennen.

So kann es beispielsweise zweckdienlich sein, zuerst eine Vielzahl von Innenschalen herzustellen, welche dann zu unterschiedlichen Zeiten für verschiedene Einsatzzwecke mit Kernschichten unterschiedlicher Wandstärke beaufschlagt werden, da die Wandstärke der Kernschicht sehr wesentlich vom Einsatzzweck des fertigen Rohres abhängt.

Weiters kann es zweckdienlich sein, die Innenschale zu fixieren und die Schaumpistole um die Innenschale herum zu führen.

Das erfindungsgemäße GFK-Rohr in Sandwichbauweise kann sowohl im Kanalbau, als auch im Druckleitungsbau eingesetzt werden. Speziell Druckleitungen für beispielsweise Trinkwasserversorgungsanlagen, welche nicht oder nur in geringer Tiefe erdverlegt sind, können durch eine entsprechende Wandstärke der Kernschicht vor übermäßiger Erwärmung oder Abkühlung geschützt werden.

Unterschiedliche Wandstärken der Kernschicht lassen sich in einfachster Weise dadurch herstellen, dass der Zweikomponenten-Schaum in mehreren Lagen auf die Innenschale aufgebracht wird. Um eine gleichmäßige Schichtdicke der Kernschicht im gewünschten Ausmaß zu erzielen, hat es sich als vorteilhaft erwiesen, in einer bevorzugten Ausführung der Erfindung die Außenfläche der Kernschicht durch Oberflächenfräsung nachzubehandeln, bevor die Außenschale aufgebracht wird.

Um GFK-Rohre zu gewinnen, welche besonders stabil gegen Seitendruck sind, werden in einer besonders bevorzugten Ausführung der Erfindung vor der Aufbringung der Außenschale in die Wandung der Kernschicht bis zur Innenschale reichende, umlaufende Rillen gefräst, welche unmittelbar nach der Rillenfräsung mit Glasfaserbändern in umlaufenden Wicklungen aufgefüllt werden, bevor die Außenschale aufgebracht wird. Diese Glasfaserbänder können harzgetränkt sein.

Je nachdem, welche Anforderungen an die Oberfläche der Außenschale und/oder die Stabilität gegen Seitendruck gestellt werden, kann die Dicke der Glasfaserband-Wicklungen annähernd der Tiefe der gefrästen Rillen entsprechen, aber auch stärker ausgebildet sein, sodass das Fertigprodukt umlaufende Rippen aufweist. Auch die Tiefe der gefrästen Rillen kann in beliebigem Ausmaß erfolgen. Je nach geforderter Stabilität gegen Seitendruck werden die Breite der Glasfaserbandrippen und/oder der Abstand der Rippen zueinander variiert.

Weiters betrifft die vorliegende Erfindung glasfaserverstärkte Kunststoffrohre gemäß Patentanspruch 11. Ein besonderer Vorteil der erfindungsgemäßen GFK-Rohre liegt darin, dass benachbarte Rohre auf sehr einfache und kostengünstige Art miteinander verbunden werden können. Herkömmliche Rohrverbindungen sind üblicherweise als Glockenmuffen bzw. Überschiebemuffen ausgebildet. Durch den mehrschaligen Aufbau des erfindungsgemäßen GFK-Rohres kann jedoch der Bereich der Kernschicht an den Rohrenden zur Aufnahme eines Dichtungsringes verwendet werden. Dies hat den zusätzlichen Vorteil, dass der Dichtungsring durch die Innenschale und die Außenschale vor mechanischer Beschädigung geschützt wird.

Die erfindungsgemäßen GFK-Rohre werden in den Figuren dargestellt, wobei die geometrische Ausbildung der Rohre ebenso wie die Ausbildung der Verbindungsstellen zweier aneinander stoßender Rohrenden ausdrücklich nicht auf die dargestellten Beispiele beschränkt ist.

Die Figuren zeigen:
- Fig. 1: den grundsätzlichen Aufbau eines erfindungsgemäßen Rohres im Querschnitt; und
- Fig. 2: ein Detail einer Rohrverbindung aus zwei erfindungsgemäßen Rohren im Längsschnitt.

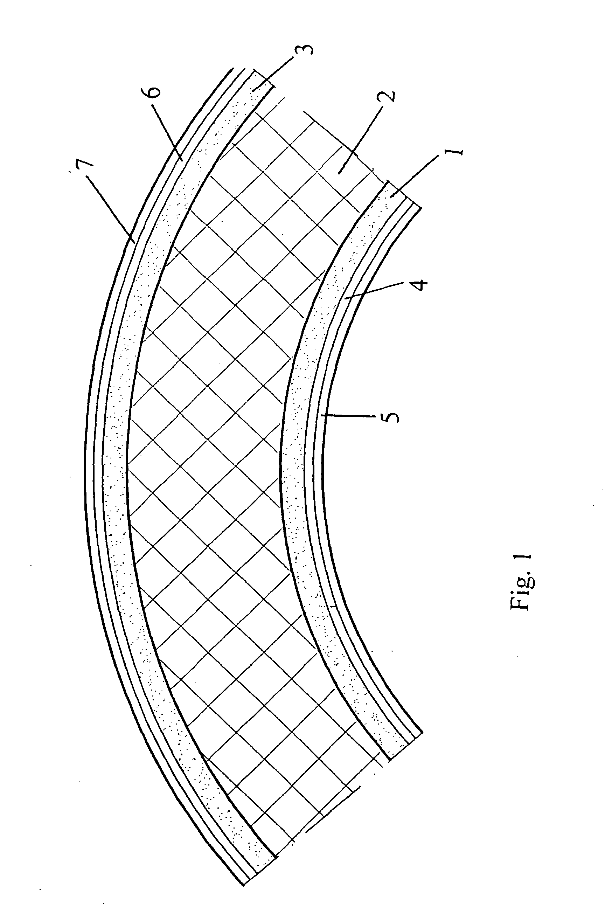

Fig. 1 zeigt einen Schnitt durch ein Rohrsegment, der den Sandwichaufbau gut veranschaulicht. Zwischen einer Innenschale 1 und einer Außenschale 3 befindet sich die Kernschicht 2. In bevorzugten Ausführungsformen können die freien Flächen von Innenschale 1 bzw. Außenschale 3 für besondere Anwendungszwecke wahlweise noch mit Deckschichten 6, einer Absandung 7, einer inneren Schutzschicht 4 und/oder einer chemischen Schutzschicht 5 überzogen sein.

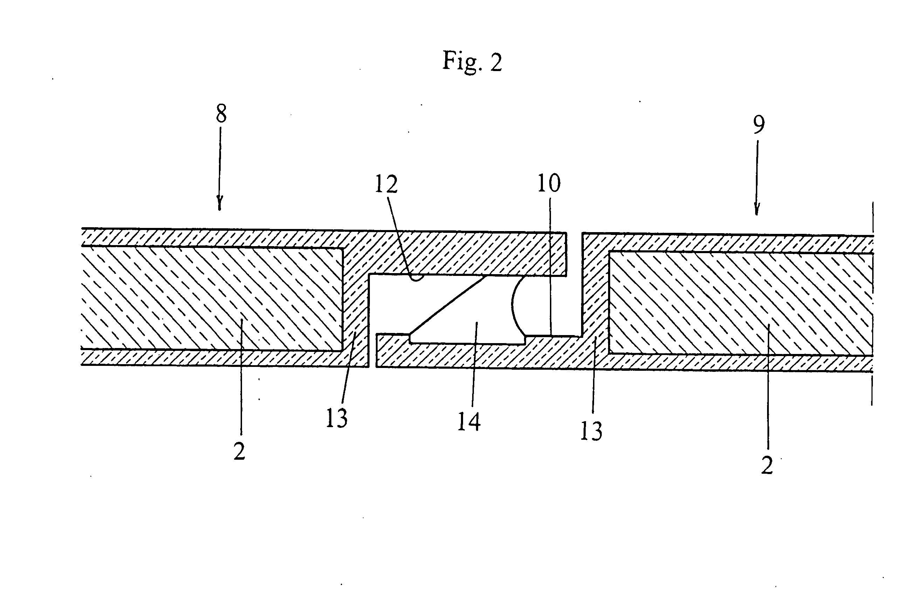

Fig. 2 zeigt einen Schnitt durch eine mögliche Ausgestaltungsform der Verbindungsstelle zweier aneinander stoßender Rohrenden. Von Rohr 8 ist im Endbereich die Innenschale 1 und der Schaumkern 2 abgefräst. Von Rohr 9 ist im Endbereich die Außenschale 3 und der Schaumkern 2 abgefräst. Auf die dadurch frei gewordene Fläche 10 der Innenschale von Rohr 9 ist hier eine Keilgleitdichtung 14 aufgebracht, welche beim Zusammenschieben der Rohrenden leicht verformt wird und dabei mit ihrer freiliegenden Keilspitze 11 dichtend an der frei gewordene Fläche 12 der Außenschale von Rohr 8 anliegt. In der hier dargestellten besonders bevorzugten Ausführungsform sind zusätzlich die Stirnflächen der Schaumkerne 2 durch Deckschichten 13 vor dem Eindringen unerwünschter Substanzen geschützt.

## Patentansprüche

1. Verfahren zur Herstellung von glasfaserverstärkten Kunststoffrohren beliebigen Querschnitts mit Sandwichstruktur, bei dem die Innenschale (1) durch Wickeln von harzgetränkten Glasfasersträngen über einen festen, rotierenden Dorn in mehreren, bevorzugt spiralförmig übereinander liegenden Lagen hergestellt wird, anschließend auf die Innenschale (1) eine Kernschicht (2) aus Schaum aufgebracht wird, wobei die Kernschicht (2) vorzugsweise mittels einer Schaumpistole in der Form von Zweikomponenten-Schaum mehrlagig aufgesprüht wird, und nach Erreichen der gewünschten Stärke der Kernschicht (2) die Außenschale (3) über die Kernschicht (2) in derselben Weise gewickelt wird, wie die Innenschale (1), **dadurch gekennzeichnet, dass** im Bereich der Stirnenden eine ringförmige Nut hergestellt wird, indem einerseits die Innenschale (1) über die Kernschicht (2) und die Außenschale (3) vorragt und andererseits die Außenschale (3) über die Kernschicht (2) und die Innenschale (1) vorragt, um einen Dichtungsring (14) aufzunehmen, der sich zwischen der Innenschale (1) eines Kunststoffrohrs und der Außenschale (3) eines weiteren Kunststoffrohrs erstreckt.

2. Verfahren zur Herstellung von glasfaserverstärkten Kunststoffrohren nach Anspruch 1, **dadurch gekennzeichnet, dass** zum Auftragen der Kernschicht (2) die Innenschale (1) und/oder die Schaumpistole rotierend gelagert ist.

3. Verfahren zur Herstellung von glasfaserverstärkten Kunststoffrohren nach Anspruch 1 oder 2, **dadurch gekennzeichnet, dass** der Schaum nach vollständiger Aushärtung der Innenschale (1) auf diese aufgetragen wird.

4. Verfahren zur Herstellung von glasfaserverstärkten Kunststoffrohren nach Anspruch 1 oder 2, **dadurch gekennzeichnet, dass** der Schaum unmittelbar nach Beendigung der Wicklung der Innenschale (1) vorzugsweise nach einer nur teilweisen Aushärtung der Innenschale (1) auf diese aufgetragen wird.

5. Verfahren zur Herstellung von glasfaserverstärkten Kunststoffrohren nach einem der Ansprüche 1 bis 4, **dadurch gekennzeichnet, dass** die Außenschale (3) unmittelbar nach dem vollständigen Auftrag der Kernschicht (2) in einer vorbestimmten Lagenanzahl aufgebracht wird.

6. Verfahren zur Herstellung von glasfaserverstärkten Kunststoffrohren nach einem der Ansprüche 1 bis 5, **dadurch gekennzeichnet, dass** vor der Aufbringung der Außenschale (3) auf die Kernschicht (2) die gewünschte Wandstärke der Kernschicht (2) durch oberflächige Fräsung hergestellt wird.

7. Verfahren zur Herstellung von glasfaserverstärkten Kunststoffrohren nach einem der Ansprüche 1 bis 6, **dadurch gekennzeichnet, dass** vor der Aufbringung der Außenschale (3) auf die Kernschicht (2) in die Kernschicht (2) umlaufende Rillen, bevorzugt bis zur Innenschale (1) reichend, gefräst werden, welche vorzugsweise unmittelbar nach der Rillenfräsung vorzugsweise mit harzgetränkten Glasfaserbändern in umlaufenden Wicklungen aufgefüllt werden, bevor die Außenschale (3) aufgebracht wird.

8. Verfahren zur Herstellung von glasfaserverstärkten Kunststoffrohren nach Anspruch 7, **dadurch gekennzeichnet, dass** die Dicke der Glasfaserband-Wicklungen mindestens der Dicke der Kernschicht (2) entspricht.

9. Verfahren zur Herstellung von glasfaserverstärkten Kunststoffrohren nach einem der Ansprüche 1 bis 8, **dadurch gekennzeichnet, dass** die Kernschicht (2) an einem oder an beiden Rohrenden teilweise oder vollständig in geringem Ausmaß ausgefräst und ein Dichtungsring (14) in der Ausfräsung angebracht wird.

10. Verfahren zur Herstellung von glasfaserverstärkten Kunststoffrohren nach einem der Ansprüche 1 bis 9, **dadurch gekennzeichnet, dass** im Bereich der Rohrenden zusätzlich zur Kernschicht (2) auch ein Teil der Innenschale (1) oder der Außenschale (3) abgefräst wird.

11. Verfahren zur Herstellung von glasfaserverstärkten Kunststoffrohren nach einem der Ansprüche 1 bis 10, **dadurch gekennzeichnet, dass** die Stirnflächen der Kernschicht (2) von Deckschichten (13, 13') abgedeckt werden.

12. Glasfaserverstärktes Kunststoffrohr in Sandwichbauweise, insbesondere hergestellt nach einem Verfahren nach einem der Ansprüche 1 bis 11, das aus einer Innenschale (1) aus gewickelten, harzgetränkten Glasfasersträngen, aus einer Außenschale (3) aus gewickelten, harzgetränkten Glasfasersträngen und aus einer zwischen der Innenschale (1) und der Außenschale (3) liegenden Kernschicht (2) aus aufgesprühtem Schaum, vorzugsweise Zweikomponenten-Schaum, besteht, **dadurch gekennzeichnet, dass** einerseits die Innenschale (1) über die Kernschicht (2) und die Außenschale (3) vorragt und andererseits die Außenschale (3) über die Kernschicht (2) und die Innenschale (1) vorragt, um einen Dichtungsring aufzunehmen, der sich zwischen der Innenschale (1) eines Kunststoffrohrs und der Außenschale (3) eines weiteren Kunststoffrohrs erstreckt.

13. Glasfaserverstärktes Kunststoffrohr nach Anspruch 12, **dadurch gekennzeichnet, dass** die Kernschicht (2) bevorzugt bis zur Innenschale reichende, gefräste Rillen aufweist, in welchen Glasfaserstränge in mehreren Lagen eingelegt sind, wobei die Stärke der übereinander liegenden Glasfaserstränge gleich groß oder größer ist wie die Tiefe der Rillen.

14. Glasfaserverstärktes Kunststoffrohr nach Anspruch 12 oder 13, **dadurch gekennzeichnet, dass** im Bereich der Rohrenden Teile der Kernschicht (2), sowie der Innenschale (1) oder der Außenschale (3) abgefräst sind.

15. Glasfaserverstärktes Kunststoffrohr nach Anspruch 12 bis 14, **dadurch gekennzeichnet, dass** die abgefrästen Rohrenden aneinander stoßender Rohre (8, 9) eine Ringnut bilden, in welche ein Dichtungsring (14) eingelegt ist, der vorzugsweise als Kegelleitdichtung ausgeführt ist.

## Claims

1. Method of producing glass-fibre reinforced plastic pipes of optional cross-section having a sandwich structure, where the inner shell (1) is made by coiling resin-impregnated strips of glass-fibre around a fixed rotating mandrel in several preferably helical layers one above the other, and where a core layer (2) of foam is subsequently applied onto the inner shell (1), which core layer (2) is preferably applied in several layers of a two-component foam by means of a spray gun, and where, once the desired strength of the core layer (2) has been reached, the outer shell (3) is wound about the core layer (2) in the same manner as the inner shell (1), **characterised in that** in the area of the pipe ends a ring-shaped groove is established by having the inner shell (1) extend beyond the core layer (2) and the outer shell (3) at one end, and the outer shell (3) beyond the core layer (2) and the inner shell (1) at the other end, for the purpose of receiving a sealing ring (14), which sits between the inner shell (1) of a plastic pipe and the outer shell (3) of another plastic pipe.

2. Method of producing glass-fibre reinforced plastic pipes according to claim 1, **characterised in that** for application of the core layer (2) the inner shell (1) and/or the spray gun are rotatably mounted.

3. Method of producing glass-fibre reinforced plastic pipes according to claim 1 or 2, **characterised in that** the foam is applied on the inner shell (1) upon complete curing of the latter.

4. Method of producing glass-fibre reinforced plastic pipes according to claim 1 or 2, **characterised in that** the foam is applied on the inner shell (1) immediately after the end of the coiling process, i.e. preferably upon only partial curing of the inner shell (1).

5. Method of producing glass-fibre reinforced plastic pipes according to any of claims 1 to 4, **characterised in that** the outer shell (3) is applied in a predefined number of layers immediately upon completion of the applying of the core layer (2).

6. Method of producing glass-fibre reinforced plastic pipes according to any of claims 1 to 5, **characterised in that** prior to applying the outer shell (3) onto the core layer (2) the desired wall-thickness of the core layer (2) is established by surface milling.

7. Method of producing glass-fibre reinforced plastic pipes according to any of claims 1 to 6, **characterised in that** prior to applying the outer shell (3) onto the core layer (2) peripheral grooves are milled into the core layer (2), which preferably extend as far as the inner shell(1), and which preferably immediately upon milling are filled preferably with resin-impregnated glass-fibre ribbons to yield helical coils, prior to applying the outer shell (3).

8. Method of producing glass-fibre reinforced plastic pipes according to claim 7, **characterised in that** the thickness of the coils of glass-fibre ribbons is at least the same as the thickness of the core layer (2).

9. Method of producing glass-fibre reinforced plastic pipes according to any of claims 1 to 8, **characterised in that** the core layer (2) at one or both pipe ends is slightly milled out either in parts or completely, and that a sealing ring (14) is inserted into the milled-out section.

10. Method of producing glass-fibre reinforced plastic pipes according to any of claims 1 to 9, **characterised in that** in the area of the pipe ends part of the inner shell (1) or the outer shell (3) is milled away in addition to the core layer (2).

11. Method of producing glass-fibre reinforced plastic pipes according to any of claims 1 to 10, **characterised in that** the end faces of the core layer (2) are covered by cover layers (13, 13').

12. Glass-fibre reinforced plastic pipe having a sandwich structure, in particular made according to a method as claimed in any of claims 1 to 11, which comprises an inner shell (1) of resin-impregnated coils of glass-fibre strips, and an outer shell (3) of resin-impregnated coils of glass-fibre strips, and a core layer (2) of sprayed-on foam, preferably two-component foam, placed between the inner shell (1) and the outer shell (3), **characterised in that** the inner shell (1) extends beyond the core layer (2) and the outer shell (3) on one end, and the outer shell (3) beyond the core layer (2) and the inner shell (1) on the other end, for the purpose of receiving a sealing ring, which sits between the inner shell (1) of one plastic pipe and the outer shell (3) of another plastic pipe.

13. Glass-fibre reinforced plastic pipe according to claim 12, **characterised in that** the core layer (2) is provided with milled grooves preferably extending as far as the inner shell, into which glass-fibre strips are inserted in several layers one above the other, the thickness of the coil of glass-fibre strips being equal to or surmounting the depth of the grooves.

14. Glass-fibre reinforced plastic pipe according to claim 12 or 13, **characterised in that** in the area of the pipe ends parts of the core layer (2) and of the inner shell (1) or outer shell (3) are milled away.

15. Glass-fibre reinforced plastic pipe according to any of claims 12 to 14, **characterised in that** the milled pipe ends of adjoining pipes (8, 9) form a ring-shaped groove, into which is inserted a sealing ring (14) preferably configured as a taper seal.

## Revendications

1. Procédé pour la fabrication de tuyaux en matériau synthétique renforcés par de la fibre de verre, de section quelconque selon lequel l'enveloppe intérieure (1) est fabriquée par un enroulage de faisceaux de fibres de verre imprégnés de résine en plusieurs couches sur un mandrin rotatif, de préférence en hélice, puis on applique sur l'enveloppe intérieure (1) une couche de noyau (2) en mousse, la couche de noyau (2) étant de préférence projetée au moyen d'un pistolet à mousse, sous la forme d'une mousse à deux composants, en plusieurs couches et après l'obtention de l'épaisseur souhaitée de la couche de noyau (2), l'enveloppe extérieure (3) est enroulée de la même manière que l'enveloppe intérieure (1) sur la couche de noyau (2),
**caractérisé en ce que**
dans la zone des extrémités frontales on réalise une rainure annulaire la faisant venir en saillie d'une part l'enveloppe intérieure (1) au-dessus de la couche de noyau (2) et l'enveloppe extérieure (3), et d'autre part l'enveloppe extérieure (3) au-dessus de la couche de noyau (2) et de la couche intérieure (1) pour recevoir un anneau d'étanchéité (14) entre l'enveloppe intérieure (1) d'un tuyau en matériau synthétique et l'enveloppe extérieure (3) d'un autre tuyau en matériau synthétique.

2. Procédé pour la fabrication de tuyau en matériau synthétique selon la revendication 1,
**caractérisé en ce que**
l'enveloppe intérieure (1) et/ou le pistolet à mousse sont montés rotatifs pour appliquer la couche de noyau (2).

3. Procédé pour la fabrication de tuyau en matériau synthétique selon la revendication 1 ou 2,
**caractérisé en ce que**
la mousse est déposée sur l'enveloppe intérieure (1) après le durcissement total de celle-ci.

4. Procédé pour la fabrication de tuyau en matériau synthétique selon la revendication 1 ou 2,
**caractérisé en ce que**
la mousse est appliquée sur l'enveloppe intérieure (1) directement après la fin de l'enroulage de l'enveloppe intérieure (1), de préférence après un durcissement seulement partiel de l'enveloppe intérieure (1).

5. Procédé pour la fabrication de tuyau en matériau synthétique selon l'une des revendications 1 à 4,
**caractérisé en ce que**
l'enveloppe extérieure (3) est posée directement après l'application de la couche de noyau (2) en un nombre prédéterminé de couches.

6. Procédé pour la fabrication de tuyau en matériau synthétique selon l'une des revendications 1 à 5,
**caractérisé en ce qu'**
on réalise l'épaisseur de paroi souhaitée de la couche de noyau (2) est réalisée par un fraisage en surface avant de poser l'enveloppe extérieure (3) sur la couche de noyau (2).

7. Procédé pour la fabrication de tuyau en matériau synthétique selon l'une des revendications 1 à 6,
**caractérisé en ce qu'**
avant la pose de l'enveloppe extérieure (3) sur la couche de noyau (2), on fraise des rainures s'étendant dans la couche de noyau (2), de préférence jusqu'à atteindre l'enveloppe intérieure (1), on remplit, ces rainures de préférence directement après leur fraisage, de préférence avec des faisceaux de fibres de verre imprégnés de résine en roulement périphérique avant que ne soit posée l'enveloppe extérieure (3).

8. Procédé pour la fabrication de tuyau en matériau synthétique selon la revendication 7,
**caractérisé en ce que**
l'épaisseur de l'enroulement de fibres de verre correspond au moins à l'épaisseur de la couche de noyau (2).

9. Procédé pour la fabrication de tuyau en matériau synthétique selon l'une des revendications 1 à 8,
**caractérisé en ce que**
la couche de noyau (2) est, à l'une ou aux deux extrémités du tuyau, fraisée partiellement ou totalement dans une mesure réduite et l'on installe un anneau d'étanchéité (14) dans le fraisage.

10. Procédé pour la fabrication de tuyau en matériau synthétique selon l'une des revendications 1 à 9,
**caractérisé en ce que**
dans la zone de l'extrémité du tuyau, en plus de la couche de noyau (2), on fraise également une partie de l'enveloppe intérieure (1) ou de l'enveloppe extérieure (3).

11. Procédé pour la fabrication de tuyau en matériau synthétique selon l'une des revendications 1 à 10,
**caractérisé en ce que**
on recouvre par des couches de recouvrement (13, 13') les faces frontales de la couche de noyau (2).

12. Tuyau en matière synthétique renforcé par fibres de verre à structure en sandwich, fabriqué en particulier selon un procédé selon l'une des revendications 1 à 11 qui se compose de faisceaux de fibres de verre enroulés imprégnés de résine, d'une enveloppe extérieure (3) de faisceaux de fibres de verre imprégnés de résine enroulés et d'une couche de noyau (2), entre l'enveloppe intérieure (1) et l'enveloppe extérieure (3), en mousse projetée, de préférence en mousse à deux composants,
**caractérisé en ce que**
d'une part le côté intérieur de l'enveloppe intérieure (1) vient en saillie au-dessus de la couche de noyau (2) et de l'enveloppe extérieure (3) et d'autre part l'enveloppe extérieure (3) vient en saillie au-dessus de la couche de noyau (2) et de l'enveloppe intérieure (1) pour recevoir un anneau d'étanchéité entre l'enveloppe intérieure (1) d'un tuyau en matière synthétique et l'enveloppe extérieure (3) d'un autre tuyau en matière synthétique.

13. Tuyau en matière synthétique renforcé par fibres de verre selon la revendication 12,
**caractérisé en ce que**
la couche de noyau présente des rainures fraisées, de préférence jusqu'à atteindre l'enveloppe intérieure, dans lesquelles des faisceaux de fibres de verre sont déposés en plusieurs couches, l'épaisseur des faisceaux de fibres de verre déposés les uns au-dessus des autres étant égale ou supérieure à la profondeur des rainures.

14. Tuyau en matière synthétique renforcé par fibres de verre selon la revendication 12 ou 13,
**caractérisé en ce que**
dans la zone des extrémités de tuyau, les parties de la couche de noyau (2) ainsi que de l'enveloppe intérieure (1) ou de l'enveloppe extérieure (3) sont fraisées.

15. Tuyau en matière synthétique renforcé par fibres de verre selon les revendications 12 à 14,
**caractérisé en ce que**
les extrémités fraisées du tuyau se rencontrant (8, 9) constituent une rainure annulaire dans laquelle est installé un anneau d'étanchéité (14) de préférence réalisé sous la forme d'un joint à surface conique.
